# EUROPEAN PATENT APPLICATION

(11) **EP 4 700 952 A1**
(43) Date of publication of application: **25.02.2026**
(21) Application number: 25192992.3
(22) Date of filing: 31.07.2025
(51) Int. Cl.: H01M 50/342, H01M 50/152, H01M 50/533, H01M 50/538, H01M 50/545, H01M 50/559, H01M 50/578

(54) **SECONDARY BATTERY, BATTERY PACK AND ELECTRONIC APPARATUS**

(30) Priority: 22.08.2024 CN 202422052258 U
(71) Applicant: AESC Japan Ltd., Yokohama-Shi, Kanagawa 220-0012 (JP)
(72) Inventor: CHEN, Xiu, Jiangyin City, Wuxi City, 214443 (CN)
(74) Representative: Becker, Eberhard

(57) **Abstract**

A secondary battery, a battery pack, and an electronic apparatus are provided. The secondary battery (100) includes a housing (101) having an opening (101O), an electrode assembly (102) accommodated in the housing (101), a cover plate (103) covering the opening (101O) and having an explosion-proof valve (103ᵥₑₙₜ), and a first connecting piece (104) arranged between the cover plate (103) and the electrode assembly (102) and welded to a region enclosed by the explosion-proof valve (103ᵥₑₙₜ) on the cover plate (103). A diameter of the region enclosed by the explosion-proof valve (103ᵥₑₙₜ) is φᵥₑₙₜ, a diameter of the first connecting piece (104) is φ_{piece}, and 0.8φᵥₑₙₜ ≤φ_{piece} ≤1.5φᵥₑₙₜ. When an internal pressure of the secondary battery (100) exceeds a threshold, the explosion-proof valve (103ᵥₑₙₜ) opens and pulls the first connecting piece (104) to be detached from the constraint of the housing (101) together.

## Description

### BACKGROUND

### Technical Field

The disclosure relates to a secondary battery, a battery pack, and an electronic apparatus.

### Description of Related Art

With the increasingly widespread application of secondary batteries in the new energy field, secondary batteries (e.g., lithium-ion batteries) may be applied to electronic apparatuses such as vehicles, energy storage, mobile phones, tablets, wearable devices, power banks, electronic cigarettes, digital products, power tools, power devices, energy storage devices, etc. In addition, with the development of secondary batteries, cylindrical batteries in secondary batteries are also receiving increasing attention. Such a secondary battery includes a current-collecting plate, a cover plate, and a welding block, and an explosion-proof valve is arranged on the cover plate. In the related art, when the diameter of the current-collecting plate is excessively large or the diameter of the explosion-proof valve is relatively small, there is a risk that the current-collecting plate may block the explosion-proof valve. Further improvement is therefore needed.

### SUMMARY

In view of the problems found in the related art, the disclosure aims to provide a secondary battery, a battery pack, and an electronic apparatus, through which the risk of a current-collecting plate blocking an explosion-proof valve during valve opening is lowered or eliminated by limiting a size relationship among the current-collecting plate, a welding block, and the explosion-proof valve.

Some embodiments of the disclosure provide a secondary battery including a housing having an opening, an electrode assembly accommodated in the housing, a cover plate covering the opening and having an explosion-proof valve, and a first connecting piece arranged between the cover plate and the electrode assembly and welded to a region enclosed by the explosion-proof valve on the cover plate. Herein, a diameter of the region enclosed by the explosion-proof valve is φᵥₑₙₜ, a diameter of the first connecting piece is φ_{piece}, 0.8φᵥₑₙₜ ≤ φ_{piece} ≤ 1.5φᵥₑₙₜ. With this size limitation, during pressure release, the first connecting piece is pulled out by the explosion-proof valve and is detached from the secondary battery.

In some embodiments, the first connecting piece is welded to the region enclosed by the explosion-proof valve on the cover plate through a welding block. Herein, an outermost diameter of the welding block is φ_{block}, φ_{block} < φᵥₑₙₜ, and optionally, φ_{block} < 0.8φᵥₑₙₜ. In this case, it is ensured that during valve opening, a cantilever of the first connecting piece is larger, so that an edge of the first connecting piece is easily bent and the first connecting piece is easily detached from the housing.

In some embodiments, φᵥₑₙₜ≤ φ_{piece} ≤1.4φᵥₑₙₜ. In the disclosure, φᵥₑₙₜ ≤ φ_{piece} may ensure that sufficient welding is provided in a radial direction between the first connecting piece and a first tab thereunder, otherwise internal resistance in the secondary battery increases. Further, φ_{piece} ≤ 1.4φᵥₑₙₜ may ensure that the first connecting piece is during pressure release.

In some embodiments, a thickness of the first connecting piece is h_{piece}, a thickness of the welding block is h_{block}, and a thickness of the cover plate is h_{cover}, where h_{piece} < h_{block}, h_{piece} < h_{cover}, and h_{piece} + h_{block} ≥ h_{cover}. In some embodiments, h_{block} ≥ h_{cover}.

In some embodiments, the welding block is welded to the cover plate through a welding imprint. Herein, a depth of the welding imprint into the welding block is less than a thickness of the welding block, and a depth of the welding imprint into the welding block is greater than 0.1mm and less than 0.3mm. In the disclosure, by controlling the welding imprint, the depth of the melt penetration on the welding block is controlled. With the minimum value of 0.1mm, welding strength is ensured, and with the maximum value of 0.3mm, thermal effects are prevented from affecting the internal electrode assembly.

In some embodiments, the electrode assembly has a first tab on a side facing the first connecting piece, and the first tab is welded to the first connecting piece. Herein, a welding area between the first connecting piece and the cover plate is greater than a welding area between the first connecting piece and the first tab. By increasing the welding area between the welding block and the cover plate, the welding strength between the welding block and the cover plate is increased, and direct current resistance (DCR) at an interface position is reduced, so that overcurrent temperature rise is improved.

In some embodiments, an outermost diameter of the electrode assembly is φ_{JR}, where φ_{block} ≤ 0.5φ_{piece} and φ_{JR} ≥φ_{piece} ≥ 0.8φ_{JR}. Herein, a welding position between the welding block and the first connecting piece is between the welding block and the edge of the first connecting piece.

In some embodiments, a portion of the first connecting piece extending beyond the explosion-proof valve includes a cutting groove.

In some embodiments, the cutting groove and the welding imprint are spaced apart in an axial direction, and an inner portion of the cutting groove is rounded.

Some other embodiments of the disclosure further provide a battery pack including the abovementioned secondary battery.

Still some other embodiments of the disclosure further provide an electronic apparatus including the abovementioned secondary battery.

To sum up, in the disclosure, by setting the size relationship among the first connecting piece, the welding block, and the explosion-proof valve, the risk of the first connecting piece blocking the explosion-proof valve during valve opening is lowered or eliminated.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are some embodiments of the disclosure, and for a person having ordinary skill in the art, other drawings can be obtained based on these drawings without an inventive effort.
FIG. 1 illustrates a vehicle with a battery pack installed.
FIG. 2A is a partial cross-sectional view illustrating a secondary battery according to an embodiment of the disclosure.
FIG. 2B is a schematic view illustrating a tab of an electrode assembly of the secondary battery according to an embodiment of the disclosure.
FIG. 2C is a three-dimensional view illustrating the secondary battery according to an embodiment of the disclosure.
FIG. 3 is a front view illustrating the secondary battery according to an embodiment of the disclosure.
FIG. 4 is a cross-sectional view illustrating the secondary battery according to an embodiment of the disclosure.

### DESCRIPTION OF THE EMBODIMENTS

For a better understanding of the spirit of the embodiments of this disclosure, further explanations are provided below together with some preferred embodiments of the disclosure.

The embodiments of this disclosure are to be described in detail in the following paragraphs. Throughout the specification of the disclosure, similar or like components and components with similar or like functions are represented by similar reference numerals. The embodiments related to the drawings described herein are illustrative, graphical, and provided for a basic understanding of the disclosure. The embodiments of the disclosure should not be interpreted as limitations of the disclosure.

As used herein, the terms "substantially", "generally", "essentially", and "approximately" are used to describe and explain small variations. When used together with an event or circumstance, these terms may refer to examples where the event or circumstance occurs precisely as well as examples where the event or circumstance occurs very approximately.

In the specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom", and their derivatives (such as "horizontally", "downwardly", "upwardly", etc.) shall be interpreted as referring to the orientation described in the discussion or shown in the drawings. These relative terms are used only for descriptive convenience and do not require that the disclosure be constructed or operated in a particular direction.

For ease of description, "first", "second", "third", etc. may be used herein to distinguish different components in one figure or a series of figures. "First", "second", "third" etc. are not intended to describe the corresponding components.

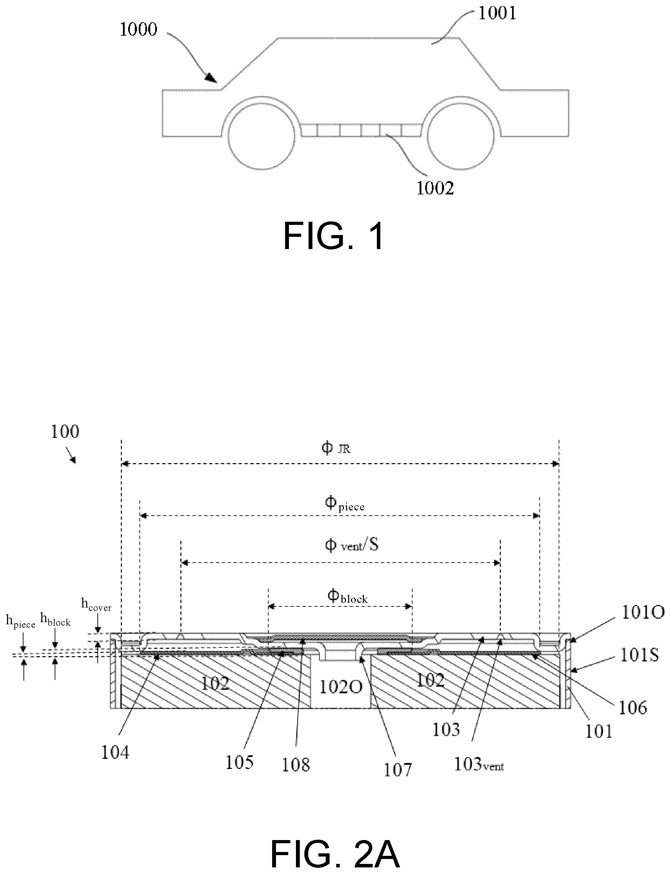

With reference to FIG. 1, for ease of description, the following embodiments are described by taking an electronic apparatus as a vehicle 1000. However, it is not difficult to understand that the electronic apparatus provided by the disclosure is not limited to a vehicle, and the electrical apparatus may be a vehicle, a mobile phone, a portable device, a notebook computer, a ship, a spacecraft, an electric toy, an electric tool, etc.

A battery pack 1002 is disposed inside the vehicle 1000, and the battery pack 1002 may be disposed at a bottom portion (as shown in FIG. 1), a front portion, a tail portion, or any other appropriate position of a vehicle body 1001. The battery pack 1002 may be used for power supply to the vehicle 1000, for example, the battery pack 1002 may act as an operating power source or a driving power source of the vehicle 1000. The battery pack 1002 may include a plurality of cylindrical batteries (e.g., a secondary battery 100 in FIG. 2A) and a housing accommodating the plurality of cylindrical batteries.

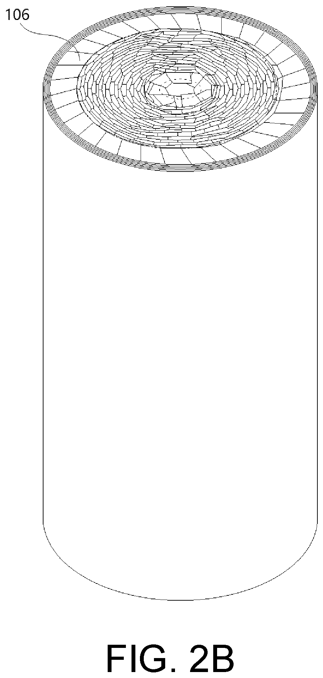

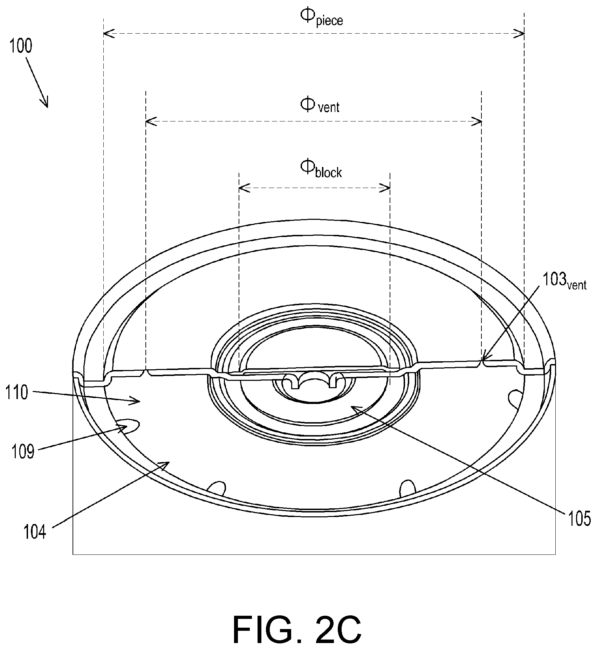

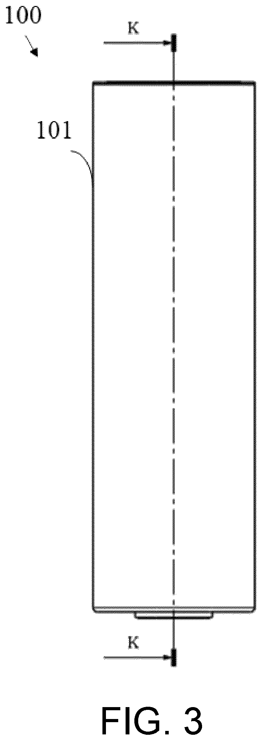

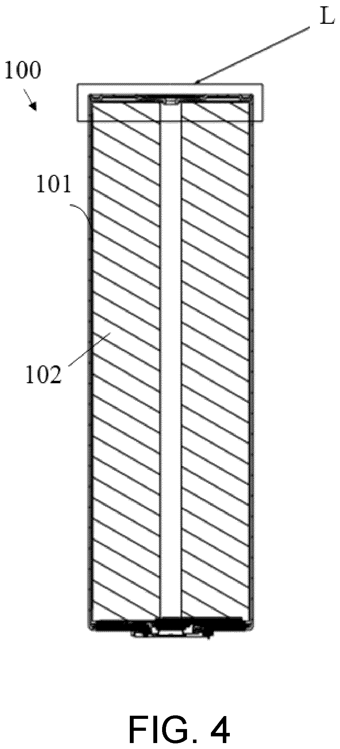

The following description uses a cylindrical battery as an example of a secondary battery. Referring to FIG. 2A to FIG. 2C, FIG. 2A is a partial cross-sectional view illustrating a secondary battery according to an embodiment of the disclosure, FIG. 2B is a schematic view illustrating a tab 106 of an electrode assembly of the secondary battery, and FIG. 2C is a three-dimensional view illustrating the secondary battery 100 according to an embodiment of the disclosure. Specifically, a cross-sectional view of a region L of the secondary battery 100 shown in FIG. 3 is shown. FIG. 3 is a front view illustrating the secondary battery 100 according to an embodiment of the disclosure, and FIG. 4 is a cross-sectional view illustrating the secondary battery 100 taken along a line K-K in FIG. 3 according to an embodiment of the disclosure. Specifically, referring to FIG. 2A, the secondary battery 100 provided by the disclosure includes a housing 101 having an opening 101O. Further, in the cross-sectional view shown in FIG. 2A, the opening 1010 is arranged at one end of a side wall 101S of the housing 101. Further, the secondary battery 100 also includes an electrode assembly (JR) 102 accommodated in the housing 101 and wound with a center hole 1020, a cover plate 103 covering the opening 1010 and having an explosion-proof valve 103ᵥₑₙₜ, and a first connecting piece 104 arranged between the cover plate 103 and the electrode assembly 102. As can be seen from FIG. 2A, the first connecting piece 104 is welded to a region S enclosed by the explosion-proof valve 103ᵥₑₙₜ of the cover plate 103, where a diameter of the region enclosed by the explosion-proof valve 103ᵥₑₙₜ is φᵥₑₙₜ, a diameter of the first connecting piece 104 is φ_{piece}, and 0.8φᵥₑₙₜ ≤ φ_{piece} ≤1.5φᵥₑₙₜ. When an internal pressure of the secondary battery 100 exceeds a threshold, the explosion-proof valve 103ᵥₑₙₜ opens and pulls the first connecting piece 104 to be detached from the constraint of the housing 101 together. In the disclosure, the region S enclosed by the explosion-proof valve 103ᵥₑₙₜ is welded and connected to the first connecting piece 104, so the electrical connection between the first connecting piece 104 and the housing 101 is implemented. In addition, during pressure release, a tension force may be provided at the welding point to pull out the first connecting piece 104. Further, in the disclosure, in addition to welding and connecting the region S enclosed by the explosion-proof valve 103ᵥₑₙₜ to the first connecting piece 104, the diameter φᵥₑₙₜ of the region S enclosed by the explosion-proof valve 103ᵥₑₙₜ and the diameter φ_{piece} of the first connecting piece are defined as 0.8φᵥₑₙₜ ≤ φ_{piece} ≤1.5φᵥₑₙₜ, so that during pressure release, the first connecting piece 104 is pulled out by the explosion-proof valve 103ᵥₑₙₜ to be detached from a battery (e.g., the secondary battery 100 provided by the disclosure). In this way, the explosion-proof valve 103ᵥₑₙₜ has a large pressure release area, so that rapid discharge of substances inside the battery under thermal runaway conditions is achieved, thermal diffusion is reduced, and it is ensured that the failure of a single battery may not cause a chain reaction of the entire battery pack.

In addition, in the disclosure, as described above, when the internal pressure of the secondary battery 100 exceeds the threshold, the explosion-proof valve 103ᵥₑₙₜ opens and pulls the first connecting piece 104 to be detached from the constraint of the housing 101 together. This is because a welding tension force F1 between the first connecting piece 104 and the cover plate 103 is greater than a welding tension force F2 between the first connecting piece 104 and the electrode assembly 102, further, F1>1.2F2. In this way, welding strength between the first connecting piece 104 and the explosion-proof valve 103ᵥₑₙₜ at valve opening is ensured, and the first connecting piece 104 is prevented from being detached, otherwise the first connecting piece 104 may not be able to be pulled out.

In some embodiments, the explosion-proof valve 103ᵥₑₙₜ is a notch. In some embodiments, the first connecting piece 104 is a negative connecting piece. In addition, in the disclosure, the first connecting piece 104 is welded to the electrode assembly 102, and the first connecting piece 104 is welded at a middle position of the region S enclosed by the explosion-proof valve 103ᵥₑₙₜ. Specifically, in some embodiments of the disclosure, a welding block 105 and the first connecting piece 104 are welded through laser seam welding, the first connecting piece 104 and the electrode assembly 102 are welded through laser penetration welding, and the welding block 105 is welded to a portion of the explosion-proof valve 103ᵥₑₙₜ where the valve opens and flies out. Further, in the disclosure, the first connecting piece 104 (negative connecting piece) and the welding block 105 may be copper, while for some other embodiments, a positive connecting piece and the corresponding welding block may be aluminum.

Next, referring to FIG. 4, the cross-sectional view of FIG. 4 illustrates the electrode assembly 102 described above. In some specific embodiments, the electrode assembly 102 is mainly formed by winding or laminating a positive terminal sheet and a negative terminal sheet, and a separator is usually provided between the positive terminal sheet and the negative terminal sheet. The positive terminal sheet includes a positive current collector and a positive active material layer, and the positive active material layer is coated on a surface of the positive current collector. The positive current collector includes a positive coating region and a positive tab connected to the positive coating region. The positive coating region is coated with the positive active material layer, and the positive tab is not coated with the positive active material layer. The negative terminal sheet includes a negative current collector and a negative active material layer, and the negative active material layer is coated on a surface of the negative current collector. The negative current collector includes a negative coating region and a negative tab connected to the negative coating region. The negative coating region is coated with the negative active material layer, and the negative tab is not coated with the negative active material layer. Taking a lithium-ion battery as an example, a material of the positive current collector may be aluminum. The positive active material layer includes a positive active material, and the positive active material may be lithium cobalt oxide, lithium iron phosphate, ternary lithium, or lithium manganate. A material of the negative current collector may be copper. The negative active material layer includes a negative active material, and the negative active material may be carbon or silicon. A material of the separator may be PP or PE, etc. In order to protect and insulate the electrode assembly 102, an outer portion the electrode assembly 102 may also be covered with an insulating film, and the insulating film may be made of PP, PE, PET, PVC, or other polymer materials.

Referring to FIG. 2A to FIG. 2C again, in the disclosure, the first connecting piece 104 is welded to the region enclosed by the explosion-proof valve 103ᵥₑₙₜ (of the cover plate 103) through the welding block 105, and where, an outermost diameter of the welding block 105 is φ_{block}, and φ_{block} < φᵥₑₙₜ, optionally, φ_{block} < 0.8φᵥₑₙₜ. In this case, it may ensure that during valve opening, a cantilever of the first connecting piece 104 is larger, so that an edge of the first connecting piece 104 may be easily bent and the first connecting piece 104 may thus be easily detached from the housing 101.

In some embodiments, referring to FIG. 2A and FIG. 2B, φᵥₑₙₜ ≤ φ_{piece} ≤1.4φᵥₑₙₜ. In this case, φᵥₑₙₜ ≤ φ_{piece} may ensure that sufficient welding is provided in a radial direction between the first connecting piece 104 and the first tab 106 (as shown in FIG. 2B) thereunder, otherwise internal resistance in the secondary battery 100 may increase. Further, φ_{piece} ≤ 1.4φᵥₑₙₜ may ensure that the first connecting piece 104 may be released during pressure release. In the secondary battery of the disclosure, the first tab 106 is covered by the first connecting piece 104, and therefore it is not visible in the three-dimensional view shown in FIG. 2C.

In FIG. 2A, in some embodiments, a thickness of the first connecting piece 104 is h_{piece}, a thickness of the welding block 105 is h_{block}, and a thickness of the cover plate 103 is h_{cover}, where h_{piece} < h_{block}, h_{piece} < h_{cover}, and h_{piece} + h_{block} ≥ h_{cover}. In some optional embodiments, h_{block} ≥ h_{cover}. By controlling the thickness relationship among the first connecting piece 104, the welding block 105, and the cover plate 103, the risk of the first connecting piece 104 blocking the explosion-proof valve 103ᵥₑₙₜ during valve opening is further lowered or eliminated.

In addition, in the disclosure, further referring to FIG. 2A, the welding block 105 is welded to the cover plate 103 through a welding imprint, where a depth of the welding imprint into the welding block 105 is less than the thickness h_{block} of the welding block 105, and the depth of the welding imprint into the welding block 105 is greater than 0.1mm and less than 0.3mm. In the disclosure, the thickness h_{block} of the welding block 105 is 0.4mm. In the disclosure, by controlling the welding imprint, the depth of the melt penetration on the welding block 105 is controlled. With the minimum value of 0.1mm, welding strength is ensured, and with the maximum value of 0.3mm, thermal effects are prevented from affecting the internal electrode assembly 102.

Further, referring to FIG. 2A and FIG. 2B, in the secondary battery 100 provided by the disclosure, the electrode assembly 102 has the first tab 106 on the side facing the first connecting piece 104, and the first tab 106 is welded to the first connecting piece 104 specifically welded underneath the first connecting piece 104. Further, in the disclosure, a welding area between the welding block 105 and the cover plate 103 is greater than a welding area between the first connecting piece 104 and the first tab 106. In the disclosure, by increasing the welding area between the welding block 105 and the cover plate 103, the welding strength between the welding block 105 and the cover plate 103 may be increased, and direct current resistance (DCR) at an interface position is reduced, so that overcurrent temperature rise is improved. Referring to FIG. 2A again, in the disclosure, the outermost diameter of the electrode assembly 102 is φ_{JR}, where φ_{block} ≤ 0.5φ_{piece} and φ_{JR} ≥ φ_{piece} ≥ 0.8φ_{JR}. Herein, the welding position between the first tab 106 and the first connecting piece 104 is between the welding block 105 and the edge of the first connecting piece 104. Through the above, the welding block 105 may avoid the welding position between the first connecting piece 104 and the first tab 106, so that the welding of the first connecting piece 104 may be easily implemented. Further, the outermost diameter φ_{JR} of the electrode assembly 102 and the φ_{piece} of the first connecting piece 104 satisfy: φ_{JR} ≥ φ_{piece} ≥ 0.8φ_{JR}, which may ensure that a sufficient welding area in the radial direction is provided between the first tab 106 and the first connecting piece 104, so that the internal resistance of the secondary battery 100 is reduced.

Further, referring to FIG. 2C, a portion of the first connecting piece 104 that extends beyond the explosion-proof valve 103ᵥₑₙₜ includes a cutting groove 109. In the disclosure, the presence of the cutting groove 109 ensures that when the first connecting piece 104 is released, its edge may not interfere with the opening of the explosion-proof valve 103ᵥₑₙₜ, and the presence of the cutting groove 109 makes the edge of the first connecting piece 104 easier to deform. Further, the cutting groove 109 and the welding imprint are spaced apart in an axial direction, and an inner portion of the cutting groove 109 is rounded, so that the cutting groove 109 may not interfere with the welding and may not produce burrs. Further, from FIG. 2C, it can be seen that a welding wire 110 is provided on the first connecting piece 104 for welding purposes.

Referring to FIG. 2A again, the secondary battery 100 provided by the disclosure also includes a liquid injection hole 107 and an end cover 108 covering the liquid injection hole. In the disclosure, the end cover 108 and the cover plate 103 together form a cover plate assembly.

In view of the foregoing, in the disclosure, by setting the size relationship among the first connecting piece 104, the welding block 105, and the explosion-proof valve 103ᵥₑₙₜ, the risk of the first connecting piece 104 blocking the explosion-proof valve 103ᵥₑₙₜ during valve opening is lowered or eliminated. This is effective for all solutions where the first connecting piece 104 is connected to parts that need to be detached after the explosion-proof valve 103 opens.

The embodiments of the disclosure further provide a battery pack (e.g., the abovementioned battery pack 1002), and the battery pack may include the secondary battery 100 according to any one of the above embodiments and may exhibit the beneficial effects described above regarding the secondary battery 100.

The embodiments of the disclosure further provide an electronic apparatus, and the electronic apparatus may include the secondary battery 100 according to any one of the above embodiments and may exhibit the beneficial effects described above regarding the secondary battery 100 and/or the battery pack 1002.

## Claims

1. A secondary battery (100), comprising:
a housing (101) having an opening (101O);
an electrode assembly (102) accommodated in the housing (101);
a cover plate (103) covering the opening (101O) and having an explosion-proof valve (103ᵥₑₙₜ); and
a first connecting piece (104) arranged between the cover plate (103) and the electrode assembly (102) and welded to a region enclosed by the explosion-proof valve (103ᵥₑₙₜ) on the cover plate (103),
wherein a diameter of the region enclosed by the explosion-proof valve (103ᵥₑₙₜ) is φᵥₑₙₜ, a diameter of the first connecting piece (104) is φ_{piece}, 0.8φᵥₑₙₜ ≤ φ_{piece} ≤1.5φᵥₑₙₜ, and when an internal pressure of the secondary battery (100) exceeds a threshold, the explosion-proof valve (103ᵥₑₙₜ) opens and pulls the first connecting piece (104) to be detached from the constraint of the housing (101) together.

2. The secondary battery according to claim 1, wherein the first connecting piece (104) is welded to the region enclosed by the explosion-proof valve (103ᵥₑₙₜ) through a welding block (105), wherein an outermost diameter of the welding block (105) is φ_{block}, and φ_{block} < φᵥₑₙₜ.

3. The secondary battery according to claim 2, wherein φ_{block} ≤ 0.8φᵥₑₙₜ.

4. The secondary battery according to claim 1, wherein φᵥₑₙₜ ≤ φ_{piece} ≤1.4φᵥₑₙₜ.

5. The secondary battery according to claim 2, wherein a thickness of the first connecting piece (104) is h_{piece}, a thickness of the welding block (105) is h_{block}, and a thickness of the cover plate (103) is h_{cover}, wherein h_{piece} < h_{block}, h_{piece} < h_{cover}, and h_{piece} + h_{block} ≥ h_{cover}.

6. The secondary battery according to claim 5, wherein h_{block} ≥ h_{cover}.

7. The secondary battery according to claim 2, wherein the welding block (105) is welded to the cover plate (103) through a welding imprint,
wherein a depth of the welding imprint into the welding block (105) is less than a thickness of the welding block (105), and a depth of the welding imprint into the welding block (105) is greater than 0.1mm and less than 0.3mm.

8. The secondary battery according to claim 1, wherein
the electrode assembly (102) has a first tab (106) on a side facing the first connecting piece (104), and the first tab (106) is welded to the first connecting piece (104),
wherein a welding area between the first connecting piece and the cover plate (103) is greater than a welding area between the first connecting piece (104) and the first tab (106).

9. The secondary battery according to claim 2, wherein an outermost diameter of the electrode assembly (102) is φ_{JR}, wherein φ_{block} ≤ 0.5φ_{piece} and φ_{JR} ≥ φ_{piece} ≥0.8φ_{JR},
wherein a welding position between the first tab (106) and the first connecting piece (104) is between the welding block (105) and an edge of the first connecting piece (104).

10. The secondary battery according to claim 7, wherein a portion of the first connecting piece (104) extending beyond the explosion-proof valve (103ᵥₑₙₜ) comprises a cutting groove (109).

11. The secondary battery according to claim 10, wherein the cutting groove (109) and the welding imprint are spaced apart in an axial direction, and an inner portion of the cutting groove (109) is rounded.

12. A battery pack (1002), comprising the secondary battery according to any one of claim 1 to claim 11.

13. An electronic apparatus (1000), comprising the secondary battery according to any one of claim 1 to claim 11.
